# EUROPÄISCHE PATENTSCHRIFT

(11) **EP 4 492 955 B1**
(45) Veröffentlichungstag und Bekanntmachung des Hinweises auf die Patenterteilung: **06.05.2026**
(21) Anmeldenummer: 23713292.3
(22) Anmeldetag: 16.03.2023
(51) Int. Cl.: A01B 73/04, A01B 73/06

(54) **LANDWIRTSCHAFTLICHES ARBEITSGERÄT**
AGRICULTURAL IMPLEMENT
OUTIL AGRICOLE

(30) Priorität: 16.03.2022 DE 102022106209
(43) Veröffentlichungstag der Anmeldung: 22.01.2025
(73) Patentinhaber: Lemken GmbH & Co KG, 46519 Alpen (DE)
(72) Erfinder: LÖBBERT, Johannes, 45721 Haltern am See (DE); PAULESSEN, Georg, 47877 Willich (DE); ACHTEN, Georg, 47918 Tönisvorst (DE)
(86) Internationale Anmeldenummer: PCT/DE2023/100206
(87) Internationale Veröffentlichungsnummer: WO 2023/174490

(56) Entgegenhaltungen:
- EP-A1- 2 113 159
- WO-A1-2013/036191
- WO-A2-2014/173388
- CA-C- 2 283 235
- US-B2- 8 235 133

## Beschreibung

Die Erfindung betrifft ein landwirtschaftliches Arbeitsgerät gemäß dem Oberbegriff des Patentanspruches 1.

Landwirtschaftliche Maschinen überschreiten oft die im öffentlichen Straßenverkehr erlaubten Abmessungen und sind daher mit klappbaren oder faltbaren Maschinenrahmen versehen, um diese von einer breiten oder ausladenden, die erlaubten Abmessungen überschreitende Arbeitsstellung in eine schmale Transportstellung zu verbringen, welche den zulässigen Abmessungen entspricht.

Die deutsche Offenlegung DE 10 2005 026 812 A1 zeigt ein landwirtschaftliches Bodenbearbeitungsgerät mit großer Arbeitsbreite mit einem Klapprahmen und daran angeordneten Bodenbearbeitungswerkzeugen. Diesem ist ein Fahrwerksrahmen vorgeordnet. Für den Straßentransport wird der Klapprahmen in einem ersten Schritt in eine senkrechte Stellung verbracht und dessen äußere Segmente in einem folgenden Schritt nach vorne geklappt, um der erlaubten Fahrzeugbreite zu genügen.

Die Offenlegung EP 2113159 A1 zeigt ein ähnliches Bodenbearbeitungsgerät mit großer Arbeitsbreite, welches gemäß Figur 1 aus einem mittleren sowie zwei seitlich daneben angeordneten äußeren Rahmensegmenten mit daran angeordneten Tiefenführungselementen besteht. Die Klappung von einer Arbeitsstellung in eine Transportstellung erfolgt wie zuvor zu DE 10 2005 026 812 A1 beschrieben. Um eine zulässige Höhe im geklappten Zustand zu erreichen, werden die in Arbeitsstellung nach hinten ausladenden Tiefenführungs- und Einebnungselemente um eine Achse verschwenkt und verringern die Gesamthöhe in Transportstellung, nachdem je Segment mehrere Sicherungsbolzen gelöst wurden. Es sind Bodenbearbeitungsgeräte bekannt, bei welchen am Vorgewende anstelle eines Fahrwerkes walzenförmige Tiefenführungselemente verwendet werden, um das ausgehobene Gerät auf dem Walzenkörper während eines Wendemanövers zu tragen. Zumindest für die Rückwärtsfahrt sind dabei die Tiefenführungselemente relativ zum Gerät zu verriegeln, um ein ungewolltes Schwenken der Tiefenführungselemente zu verhindern. Hierzu muss ein Bediener die Verriegelung manuell betätigen.

Aufgabe der Erfindung ist es, ein landwirtschaftliches Arbeitsgerät bereit zu stellen, bei welchem in Arbeitsstellung nach hinten ausladenden Geräteteile, welche durch Klappung in eine Transportstellung insbesondere in eine obere oder weniger ausladende Position gelangen, eine zulässige Transporthöhe des landwirtschaftlichen Arbeitsgerätes nicht überschreiten. Dabei sollen die ausladende Geräteteile wie beispielsweise Tiefenführungselemente automatisch ver- oder entriegelt werden

Diese Aufgabe wird durch die Merkmale des kennzeichnenden Teiles des Anspruches 1 gelöst.

Ein Landwirtschaftliches Arbeitsgerät, welches mittels einer Hubvorrichtung von einer Arbeitsstellung in eine Aushubstellung aushoben oder umgekehrt zurück in die Arbeitsstellung abgesenkt werden kann, weist einen Rahmen auf. Der Rahmen kann ein- oder mehrteilig ausgebildet sein und weitere Hilfsrahmen oder Teilsegmente aufweisen, welche auch beweglich zueinander angeordnet sein können. Dem Rahmen sind mehrere Arbeitswerkzeuge vorzugsweise in einer Werkzeugebene ausgerichtet zugeordnet. Dabei sind den Arbeitswerkzeugen des landwirtschaftlichen Arbeitsgerätes Tiefenführungsmittel nachgelagert zugeordnet, mit welchen in einer Arbeitsstellung des Arbeitsgerätes der Abstand der Arbeitswerkzeuge zu einer Bodenoberfläche eingestellt oder verändert werden kann. Zwischen dem Rahmen und den Tiefenführungsmitteln sind zumindest eine Scharniereinheit und eine Arretierung angeordnet, mittels welcher die Tiefenführungsmittel in der Arbeitsstellung relativ und unbeweglich zum Rahmen arretiert sind und bei einer Überführung von der Arbeitstellung in eine Aushubstellung des Arbeitsgerätes zum Rahmen oder den Arbeitswerkzeugen hin mittels der Scharniereinheit beweglich pendeln oder schwenken können. Die Arretierung ist passiv und durch Aushub des Arbeitsgerätes oder des Rahmens lösbar ausgebildet. Somit wird eine in Arbeitsstellung des Arbeitsgerätes benötigte Verriegelung der Tiefenführungsmittel durch den Aushub des Arbeitsgerätes oder seines Rahmens oder Teilen davon wieder entriegelt. Dabei ist kein direktes oder aktives Betätigen einer Arretierung durch einen Bediener oder eine Folgesteuerung erforderlich, was die Komplexität und Herstellkosten des landwirtschaftichen Arbeitsgerätes signifikant senkt.

Zugleich wird beim Aushub des Arbeitsgerätes die Ausladung der Tiefenführungsmittel zugunsten eines geringeren Hubkraftbedarfes verkürzt. Dabei bewirkt die geringere Ausladung der Tiefenführungsmittel auch eine geringere Transporthöhe des landwirtschaftlichen Arbeitsgerätes.

In einer erweiterten Erfindungsform weist die Arretierung zumindest einen Vorsprung und eine Ausnehmung auf. Dabei können der Vorsprung und die Ausnehmung in eine Arretierstellung verhaken und eine Bewegung zwischen dem Vorsprung und der Ausnehmung in einer ersten Richtung unterbinden. Weiterhin wird durch eine Bewegung zwischen dem Vorsprung und der Ausnehmung in einer zweiten Richtung eine Lösestellung der Arretierung erreicht. In dieser Lösestellung können der Vorsprung und die Ausnehmung entlang der ersten Richtung aneinander vorbei bewegt werden.

In einer weiteren Erfindungsform sind der Vorsprung und die Ausnehmung derart ausgebildet, dass deren Bewegung in der ersten Richtung und der zweiten Richtung in einer gemeinsamen Ebene verlaufend angeordnet sind.

Das Lösen und Verriegeln der Arretierung und die Bewegung der beteiligten Komponenten findet lediglich in einem zweidimensionalen Bereich statt. Entsprechend fällt die Vorrichtung wenig komplex aus und ist daher einfach und mit wenigen Mitteln aufzubauen.

In einer verbesserten Ausführung der vorgehenden Erfindungsformen sind dazu weitere Führungsmittel zumindest mittelbar zwischen Rahmen und Tiefenführungsmitteln angeordnet. Die Führungsmittel sind ausgebildet, eine Bewegung der Tiefenführungsmittel im Bereich der Arretierung in der ersten Richtung und / oder der zweiten Richtung zu führen und / oder zu limitieren.

Die Führungsmittel können als Kulissenführung, bewegliche Laschen, Begrenzungsseile oder Ketten, als Anschläge oder als Lenkergetriebe ausgebildet sein. Auch Kombinationen vorgenannter Mittel sind möglich. Entscheidend ist die Eignung der Mittel, eine Bewegung entlang einer bestimmten Bahnkurve oder Führungsrichtung vorzugeben oder zu bestimmen und / oder entlang einer nicht vorgesehen Führungsrichtung zu verhindern.

**In** einer weiteren Erfindungsform ist die Arretierung oder Teile derselben hakenförmig und beweglich ausgebildet. Bevorzugt wird die Bewegung der hakenförmigen Arretierung durch einen Energiespeicher unterstützt. Die Beweglichkeit der Arretierung ermöglicht ein störungsfreies Einrasten und Verriegeln, während der verriegelte Zustand der Arretierung hergestellt oder ereicht wird. Dies geschieht beispielsweise beim Absenken des Arbeitsgerätes, während das Tiefenführungselement bereits auf dem Boden steht. Eine Entriegelung bei Aushub des Arbeitsgerätes findet dabei ohne zumindest nennenswerte Bewegung der eigentlichen hakenförmigen Arretierung aus seiner Verriegelungsstellung statt.

In einer Erfindungsform für große Arbeitsbreiten für das Arbeitsgerät ist dieses mehrteilig und klappbar ausgebildet. Dabei sind zumindest ein erster Ausleger und ein zweiter Ausleger klapp- oder schwenkbar mit dem Rahmen verbunden. Die Arbeitswerkzeuge und Tiefenführungsmittel sind bevorzugt den jeweiligen Auslegern zugeordnet. Somit kann das Arbeitsgerät von einer großen Arbeitsbreite, welche die zulässigen Abmessungen im Straßenverkehr überschreitet, in eine dem Straßenverkehr zugängliche Transportposition verbracht werden.

In einer weiteren Erfindungsform weist der Rahmen des Arbeitsgerätes einen ersten Kipprahmen auf, welcher um eine Kippachse, welche quer oder senkrecht zu einer Mittelebene des Arbeitsgerätes schwenk- oder kippbar angeordnet ist. Dabei sind die Ausleger des Arbeitsgerätes schwenkbar um eine Schwenkachse, welche weitgehend parallel zu der Mittelebene des Arbeitsgerätes schwenkbar verläuft, angeordnet. Insbesondere aufgesattelte Arbeitsgeräte, welche Zugdeichsel und eine Transportachse aufweisen, welche in Arbeitsstellung vor den Arbeitswerkzeugen angeordnet sind, können in einem ersten Klappvorgang nach oben geklappt werden, wobei die sodann aufrecht stehenden Ausleger mit den daran befestigten Arbeitswerkzeugen und Tiefenführungsmitteln in einem weiteren Schritt nach vorne in die finale Transportposition geschwenkt werden können.

Weiterhin und bevorzugt sind die Tiefenführungsmittel als Doppelwalzeneinheit ausgebildet, welche über einen Pendelausgleich zum Ausgleich von Bodenunebenheiten mit den Auslegern verbunden ist. Der Pendelausgleich ist vorzugsweise mit einer Boogieachse versehen, welche im mittleren Bereich der zwischen Doppelwalzeneinheit liegt und über zumindest einen Tragrahmen mit dem jeweiligen Ausleger verbunden ist.

Alternativ können die Tiefenführungsmittel, welche den Arbeitswerkzeugen des landwirtschaftlichen Arbeitsgerätes nachgelagert sind, mittels eines Lenkergetriebes derart angeordnet sein, dass die Position der Tiefenführungsmittel zu den Arbeitswerkzeugen in Abstand und/oder Neigung einstellbar oder veränderbar ausgebildet sind. Damit kann ein Momentanpol der Lenker des Lenkergetriebes vorzugsweise in den Bereich der Tiefenführungsmittel gelegt werden. Im Falle parallel zueinander angeordneter Lenker kann eine Höhen- und/oder Abstandsverstellung der Tiefenführungsmittel gemeinsam mit weiteren Zusatzwerkzeugen, wie beispielsweise Planierwerkzeugen, erfolgen.

In einer weiteren Ausführungsform sind den Arbeitswerkzeugen und/oder den Tiefenführungsmitteln Einebnungs-, Prall-, Stau- und/oder Striegelwerkzeuge zugeordnet. Hiermit kann das Arbeitsergebnis der landwirtschaftlichen Maschine, insbesondere die Ein- oder Verarbeitung von landwirtschaftlichen Material auf oder in die Bodenoberfläche, weiter verbessert und optimiert werden.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 landwirtschaftliches Gerät in Transportstellung in Seitenansicht,
Fig.2 das landwirtschaftliche Gerät aus Figur 1 in einer teilgeklappten Zwischenstellung,
Fig.3 das landwirtschaftliche Gerät aus Figur 1 in Arbeitsstellung,
Fig. 4 das landwirtschaftliche Gerät aus Figur 3 in einer perspektivischen Darstellung,
Fig. 5 ein Detail der Tiefenführungsmittel aus Figur 3
Fig. 6, Fig. 7 und Fig. 8 ein Detail der Arretierung aus aus Figur 5, sowie Fig. 9 ein Detail der Tiefenführungsmittel analog zuFigur 2.

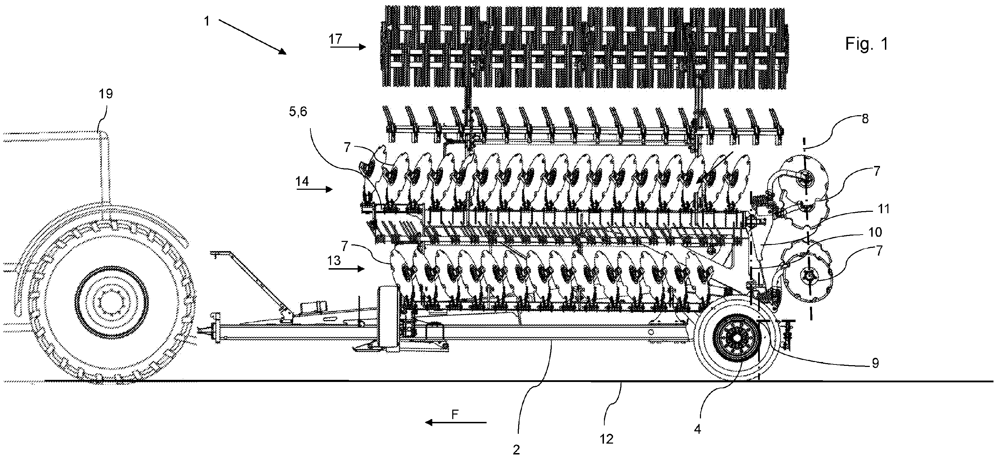

Bei den Darstellungen handelt es sich im Wesentlichen um konkrete Ausführungsbeispiele. Die Erfindung ist hingegen nicht auf die dargestellten Ausführungsbeispiele beschränkt, sondern kann auch in fachmännischer Weise abgewandelt werden, um sie an einen bestimmten Anwendungsfall anzupassen. Figur 1 zeigt ein landwirtschaftliches Arbeitsgerät 1 mit einem tragenden Rahmen 2, welcher im hinteren Bereich mit einen Fahrwerk 4 auf einer Bodenoberfläche 12 abgestützt ist sowie im vorderen Bereich mit einer Zugdeichsel an einer landwirtschaftlichen Zugmaschine 19 angehängt ist, welche das landwirtschaftliche Arbeitsgerät 1 in Fahrtrichtung F fortbewegt. Die Zugdeichsel ist V-förmig und als integraler Bestandteil des Rahmens 2 ausgebildet. Alternativ kann eine separate, Seiten- und Höhen bewegliche Zugdeichsel vorgesehen werden. In der Nähe des Fahrwerkes 4 ist ein Kipprahmen 11 angeordnet, welcher um die Achse 9 schwenkbar oder kippbar mit dem Rahmen 2 verbunden ist. An dem Kipprahmen 11 sind einige Arbeitswerkzeuge 7 angeordnet, welche als drehbare Hohlscheiben ausgebildet sind und deren Mitten in einer gemeinsamen Werkzeugebene 8 liegen bzw. diese bilden.

Mittels Scharniergelenken sind - in Fahrtrichtung F gesehen - links und rechts jeweils ein Ausleger 5 und 6 schwenkbar am Kipprahmen 11 angebracht. Der rechte Ausleger 6 ist größtenteils durch den linken Ausleger 5 in der Seitenansicht verdeckt. Die Scharniergelenke bilden jeweils eine Gelenkachse 10, um welche die Ausleger 5 und 6 zur Seite in eine Zwischenstellung ausgeschwenkt werden können. Die Schwenkachsen 10 stehen in der Transportstellung etwa senkrecht zur Bodenoberfläche 12. Somit werden die notwendigen Momente und Stellkräfte zum Ausschwenken der Ausleger 5 und 6 in die Zwischenstellung oder zurück minimiert. Die Ausleger 5 und 6 liegen in der dargestellten Transportstellung parallel zur Fahrtrichtung F entlang des Rahmens 2 und sind in dessen vorderen Bereich auf einer Quertraverse in ihrer Endlage abgestützt. Die Ausleger 5 und 6 sind jeweils mit Arbeitswerkzeugen 7 in einer ersten Werkzeugreihe 13 und einer zweiten Werkzeugreihe 14 bestückt. Alternativ zu den oben genannten Hohlscheiben können die Arbeitswerkzeuge 7 auch als Zinken, Schare, Säwerkzeuge oder zur Bearbeitung oder zum Schneiden von pflanzlichem Material ausgebildet sein. Oberhalb der Ausleger 5 und 6 bzw. der Arbeitswerkzeuge 7 sind als Walzen ausgebildete Tiefenführungselemente 17 angeordnet und vorzugsweise einstellbar mit den jeweiligen Auslegern 5 und 6 verbunden. In der ausgeschwenkten Zwischenstellung der Ausleger 5 und 6 bilden die Mitten der Arbeitswerkzeuge 7 gemeinsam mit den Arbeitswerkzeugen 7 des Kipprahmens 11 die Werkzeugebene 8.

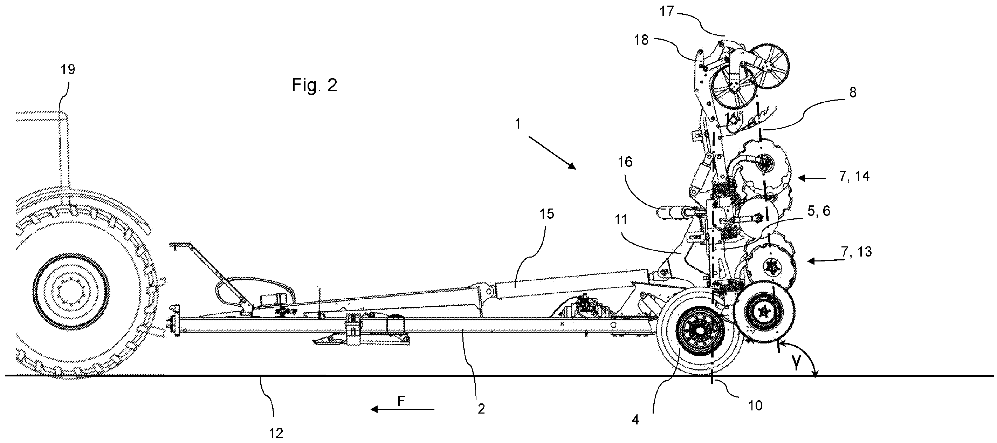

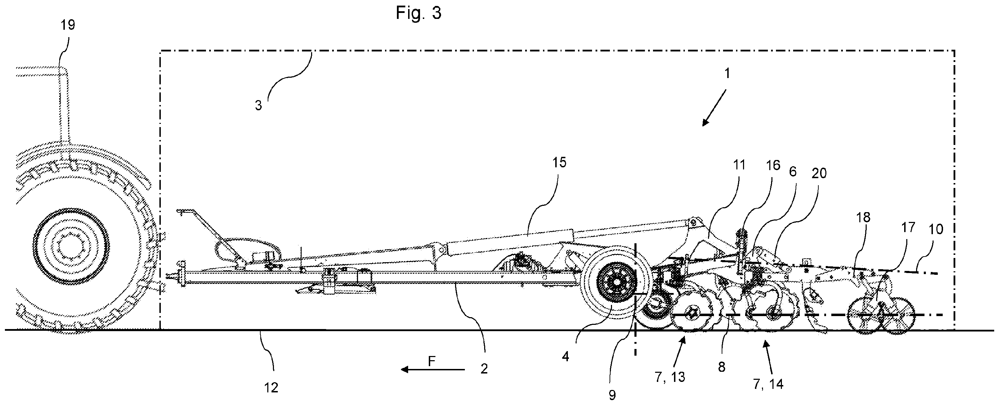

Figur 2 zeigt das landwirtschaftliche Arbeitsgerät aus Figur 1 in einer teilgeklappten Zwischenstellung, ebenfalls in Seitenansicht. Die Ausleger 5 und 6 sind mittels der als Hydraulikzylinder ausgebildeten Stellmotoren 16, welche zwischen dem Kipprahmen 11 und den Auslegern 5 und 6 angeordnet sind, von der parallel zur Fahrtrichtung F verlaufenden Ausrichtung (Transportstellung) in die dargestellte, senkrecht zur Fahrtrichtung F verlaufende Ausrichtung (Zwischenstellung) ausgeschwenkt. Auch hier sind die jeweiligen Schwenkachsen 10 des Kipprahmens 11 senkrecht zur Bodenoberfläche ausgerichtet. Der in Figur 1 verdeckte, ebenfalls als Hydraulikzylinder ausgebildeten Stellmotor 15, welcher zwischen dem Rahmen 2 und dem Kipprahmen gelenkig angeordnet ist, hält den Kipprahmen 11 in dieser Zwischenstellung bzw. der Transportstellung aus Figur 1. Am oberen beziehungsweise hinteren Ende der Ausleger sind die Tiefenführungsmittel angeordnet. Damit diese nicht aus der zulässigen Fahrzeughöhe herausragen, sind diese mittels der Scharniereinheiten 18 weiter nach unten geklappt. Mit dem Stellmotor 15 kann der Kippwinkel γ derart eingestellt werden, dass einerseits die Schwenkachsen 10 für die Transport- und Zwischenstellung senkrecht zum Boden stehen bzw. die Ausleger parallel zur Bodenoberfläche verschwenkt werden können und andererseits die Ausleger und der Kipprahmen mit den daran in Werkzeugreihen 13 und 14 angeordneten Arbeitswerkzeugen in die Arbeitsstellung abgesenkt werden können, wie im folgendem zu Figur 3 dargestellt. Der Kippwinkel γ ist exemplarisch zwischen der Werkzeugebene 8 und der Bodenoberfläche bemaßt, beschreibt aber den generell den Kippwinkel des Kipprahmens 11.

Figur 3 zeigt die zuvor erwähnte Arbeitsstellung des landwirtschaftlichen Gerätes 1. Hier ist der Kipprahmen 11 relativ zum Rahmen 2 um die Kippachse 9 mittels des Stellmotors 15 abgesenkt. In dieser Stellung sind die Arbeitswerkzeuge 7 bzw. deren Werkzeugebene 8 parallel zum Boden ausgerichtet. Die Schwenkachsen 10 weisen eine Schrägstellung zur Werkzeugebene 8 als Winkel β auf, welcher maximal 10°, bevorzugt etwa 1° bis 5° beträgt. Der Kipprahmen 11 ist derart weit abgesenkt, dass die Schwenkachsen 10, in Fahrtrichtung gesehen, um den Winkel β nach hinten zur Bodenoberfläche 12 geneigt sind, da diese, wie in Figur 3 dargestellt, parallel zur Werkzeugebene 8 verläuft. Bei eventuellen Bodenunebenheiten kann die Ausrichtung der Werkzeugebene 8 durch den Stellmotor 15 entsprechend justiert werden. Die erste Werkzeugreihe 13 und die zweite Werkzeugreihe 14 sind in Fahrtrichtung F gesehen hintereinander hinter der Kippachse 9 angeordnet, dahinter folgen die Tiefenführungsmittel 17, welche beispielsweise als drehbare Walzen ausgebildet sind. Im vorliegenden Fall ist eine Doppelwalze mit ineinander überlappenden Walzenringen dargestellt. Diese kann ein Boogie-Gelenk oder, wie dargestellt, ein Lenkergetriebe aufweisen, um ebenfalls Bodenunebenheiten oder Neigungsunterschiede der Werkzeugebene 8 auszugleichen. Durch weiteres Nachstellen des Stellmotors 15 kann die Werkzeugebene 8 derart verstellt werden, dass die Arbeitswerkzeuge aus dem Boden zumindest teilweise ausgehoben werden und das gesamte Gerät sich lediglich auf den Tiefenführungsmitteln 17 abstützt und am Feldende auf diesem gewendet werden kann. Ergänzend weisen die Tiefenführungsmittel 17 einen oder mehrere Stellmotoren 20 oder Arretierungen auf, mit welchen deren Position zu den Auslegern und somit die Arbeitstiefe der Arbeitswerkzeuge 7 verändert werden kann. Auch durch Ausfahren der Stellmotoren 20 ist ein Aushub??? der Arbeitswerkzeuge 7 und somit ein Wenden auf dem Tiefenführungsmittel 17 möglich. Beim Aushub der Ausleger 5 und 6 zurück in die Zwischenstellung kann das Tiefenführungsmittel 17 mittels einer Scharniereinheit 18 nach unten fallen und die Ausladung nach hinten entgegen der Fahrtrichtung F verkürzen.

In dieser Ansicht ist auch die Mittelebene 3 sichtbar, welche auch die Symmetrieebene des landwirtschaftlichen Arbeitsgeräts 1 bzw. seines Mittelrahmens 2 sowie des Kipprahmens 11 bildet. Rechts und links der Mittelebene 3 erstrecken sich die Ausleger 5 und 6 mit ihren Arbeitswerkzeugen 7 und Tiefenführungsmitteln 17 und definieren die Arbeitsbreite des Arbeitsgerätes 1.

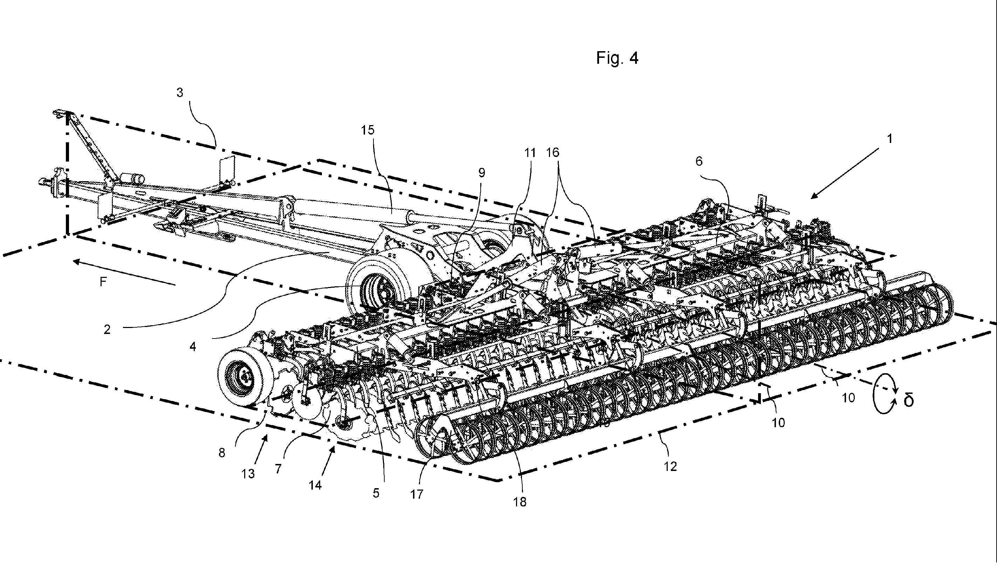

Figur 4 zeigt das landwirtschaftliche Arbeitsgerät in Arbeitsstellung in einer Perspektive von schräg hinten, wie es auf der als Ebene dargestellten Bodenoberfläche 12 in Fahrtrichtung F bewegt wird. Senkrecht zur Bodenoberfläche 12 und parallel zur Fahrtrichtung steht die Mittelebene 3, welche zugleich die Symmetrieebene bildet, von welcher sich der linke Ausleger 5 und der rechte Ausleger 6 mit den Werkzeugreihen 13 und 14 und entsprechenden Tiefenführungsmitteln 17 jeweils nach außen weg erstrecken. Mit dem Winkel δ ist eine Schwenkbewegung der Ausleger 5 und 6 um die Schwenkachsen 10 des Kipprahmens 11 dargestellt, mit welchem die Ausleger 5 und 6 mittels der Tiefenführungselemente 17 Geländeunebenheiten oder Kupierungen der Bodenoberfläche 12 folgen können, welche sich entlang der Mittelebene 3 erstrecken.

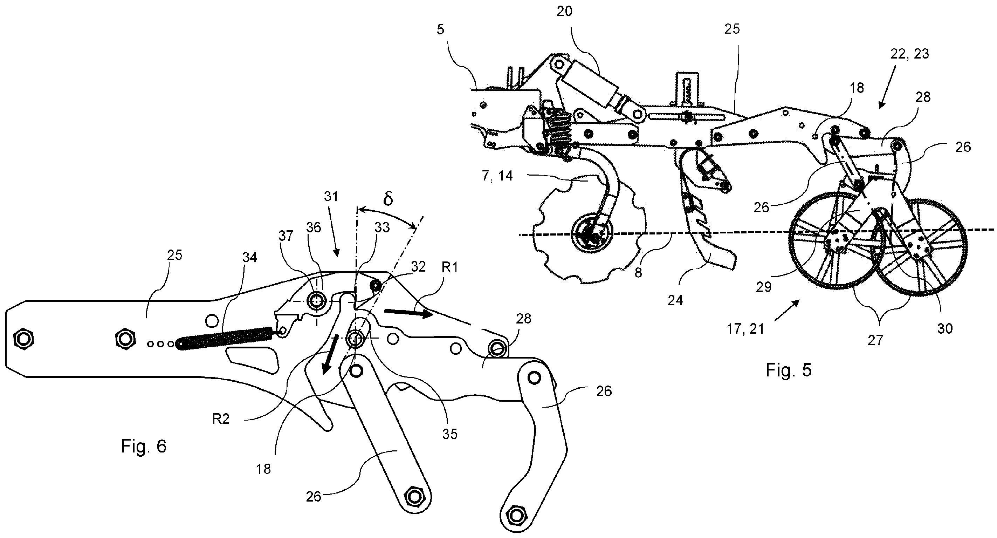

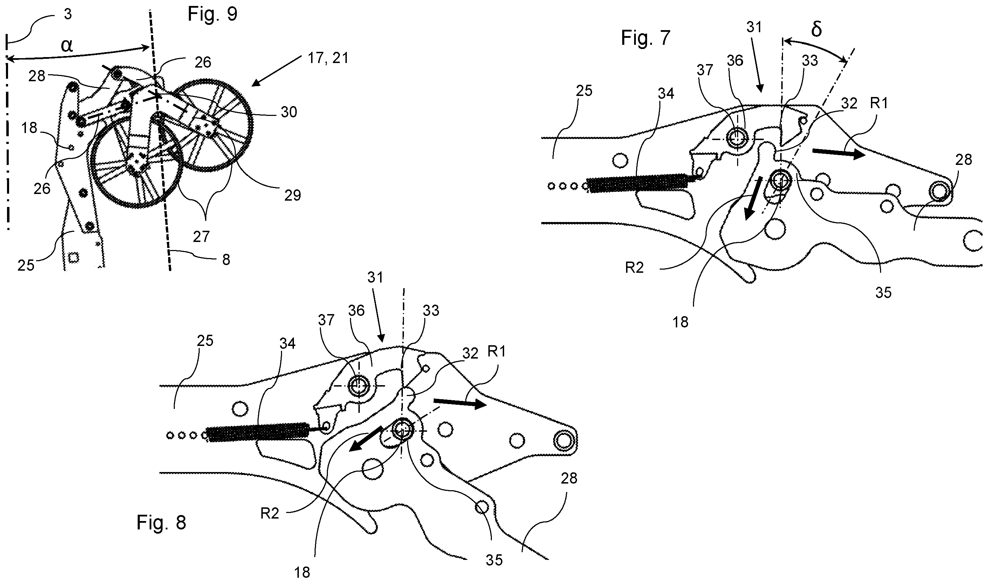

Figur 5 zeigt den hinteren Teilbereich eines Auslegers 5 in Seitenansicht. Über einen schwenkbaren Tragarm 25, welcher mittels eines Stellmotors 20 betätigt wird, kann das Tiefenführungsmittel 17 in der Höhe zu den Arbeitswerkzeugen 7 oder der Werkzeugebene 8 eingestellt werden. Zugleich können die Arbeitswerkzeuge 7 über die Bodenoberfläche 12 soweit ausgehoben werden, dass das Arbeitsgerät auf der als Walze ausgebildetes Tiefenführungsmittel 17 gewendet oder rückwärts gefahren werden kann. Bevorzugt sind hierzu der oder die Stellmotoren 15 oder 20 als Mehrkolben- oder Memoryzylinder ausgebildet. Das hier beispielsweise als Doppelwalzeneinheit 21 ausgebildete Tiefenführungsmittel 17 ist mittels eines Lenkergetriebes 23 pendelnd aufgehängt. Die Doppelwalzeneinheit 21 wird aus einem Walzenrahmen 29 sowie zwei daran drehbar gelagerten Walzen 27 gebildet. Diese weisen jeweils auf einer Achse versetzt zueinander angeordnete Andruckringe auf. Diese überlappen einander mit ihren Durchmessern und sind somit selbstreinigend. Dabei bilden der Tragarm 25 beziehungsweise ein Anschlag 28 sowie der Rahmen 29 der Doppelwalze 21 gemeinsam mit zwei pendelnd gelagerten Lenkern 26 ein Viergelenk-Lenkergetriebe 23. Die beiden Lenker 26 konvergieren in einem Momentanpol 30, welcher den Pendelausgleich 22 bildet. Zwischen der hinteren Werkzeugreihe 14 und dem Tiefenführungsmittel 17 ist ein höhenverstellbarer Striegel als Einebnungswerkzeug verbaut. Der Anschlag 28 ist über das Scharnier 18 gelenkig mit dem Tragarm 25 verbunden und durch diesen, wie dargestellt, in der Bewegung nach oben begrenzt. Beim Aushub des Auslegers 5 über die Bodenoberfläche kann der Anschlag 28 gemeinsam mit dem Tiefenführungsmittel 17 nach unten und in Richtung der Arbeitswerkzeuge 7 durchschwenken, wie in Figur 8 und in aufrecht geklappter Stellung in Figur 9 analog zu Figur 2 dargestellt. Der Tragarm 25 ist etwa parallel zur Werkzeugebene 8 ausgerichtet und im Winkel α schräg zur Mittelebene 3 orientiert, wie schon zuvor beschrieben und dargestellt. Durch die Pendelbewegung des Anschlages 28 um die Achse des Scharnieres 18 sowie der Lenker 26 fällt das Tiefenführungselement 17 in eine untere Transportstellung, welche eine veringerte Transporthöhe beziehungsweise einen geringeren Abstand zu den Arbeitswerktzeugen 7 aufweist. Der nach außen über die Werkzeugebene 8 herausstehende Durchmesser der Walze 27 bleibt innnerhalb einer zulässigen Transportbreite, da der Überstand durch die Schrägstellung der Werkzeugebene 8 kompensiert wird. Alternativ zum dargestellten Anschlag 28 aus Figur 9 kann dieser auch am anderen Ende der Lenker 26 gemeinsam mit dem Walzenrahmen 29 zusammenwirken. Durch eine geschickte Auswahl der Scharnier-, Anschlag- und Lenkeranordnungen kann die Ausladung der Tiefenführungselemente 17 nach oben und zur Seite optimiert werden. Platz- und kostensparend kann eine Achse des Scharnieres 18 gemeinsam mit einem Gelenkpunkt eines Lenkers 26 kombiniert werden.

Figur 6 zeigt die Arretierung 31 zum besseren Verständnis als teilweise freigestellten Ausschnitt aus Figur 5 in verriegelter Stellung.

An einem Tragarm 25 ist ein Haken 36 schwenk- oder drehbar um die Schwenkachse 37 sowie ein Anschlag 28 drehbar um die Scharniereinheit 18 gelagert. Der Haken 36 weist eine Ausnehmung 33 auf, welche mit einem Vorsprung 32 des Anschlages 28 korrespondiert. Die Ausnehmung 33 und der Vorsprung 32 verhaken derart ineinander, dass eine Bewegung oder Schwenkung des Anschlages 28 in einer ersten Richtung R1 verhindert wird. Der Haken 36 wird durch den als Zugfeder ausgebildeten, vorgespannten Energiespeicher 34 in der gezeigten Position gehalten. Vom Tragarm 25 nach hinten erstreckt sich der Anschlag 28, welcher nach unten schwenkbar um die Scharniereinheit 18 am Tragarm 25 montiert ist. Die Schwenkbarkeit des Anschlages 28 wird nach oben durch das Ende vom Tragarm 25 begrenzt. Am Anschlag 28 ist das Tiefenführungselement 17 mittels der Lenker 26 befestigt, wie in den vorherigen Figuren bereits beschrieben und dargestellt. Schwenkt der Anschlag 28 aus einer entriegelten Stellung, wie sie beim Übergang von einer ausgehobenen Transportstellung in die Arbeitsstellung des Gerätes 1 auftritt, kann der Haken 36 um die Schwenkachse 37 drehend und entgegen der Kraft des Energiespeichers 34 nach oben ausweichen und dann zurück in die gezeigte Endlage schwenken. Der Anschlag 28 besitzt weiterhin eine als langlochförmige Ausnehmung ausgebildete Kulisse 35. Diese umschließt die bolzen- oder buchsenförmig ausgebildete Scharniereinheit 18, welche wiederum am Tragarm 25 befestigt ist. Die Hauptausdehnungsrichtung der Kulisse 35 ist dabei schräg zur Kontaktfläche zwischen Ausnehmung 33 und Vorsprung 32 ausgerichtet, um ein Verkanten zwischen Haken 36 und Anschlag 28 zu vermeiden. Die Hauptausdehnungsrichtung der Kulisse 35 stellt zugleich die Bewegungsfreiheit des Tragarmes 25 entlang einer zweiten Richtung R2 dar. Bevorzugt beträgt die Schrägstellung δ der Kontaktfläche zur Hauptausdehnungsrichtung der Kulisse 35 zwischen 1 und 45 Grad, weiter bevorzugt zwischen 10 und 30 Grad und insbesondere zwischen 15 und 20 Grad. Weiterhin ist die Kontaktfläche zwischen Ausnehmung 33 und Vorsprung 32 etwa radial zur Mitte der Scharniereinheit 18 ausgerichtet, um ein selbsttätiges, unbeabsichtigtes Entriegeln zu vermeiden.

Figur 7 zeigt die gleiche Arretierung 31 aus Figur 6 in entriegelter Stellung. Durch den Aushub des Arbeitsgerätes 1 mitsamt seinem Tragarm 25 verbleibt das Tiefenführungsmittel 17 mit seinem Gewicht zunächst auf der Bodenoberfläche 12 und zieht somit den Anschlag 28 nach unten. Zusammen mit dem Anschlag 28 bewegt sich der Vorsprung 32 aus der Ausnehmung 33 entlang der zweiten Richtung R2. Durch diesen translatorischen Versatz kann der Anschlag 28 anschließend um den Mittelpunkt der Scharniereinheit 18 nach hinten in Richtung der ersten Richtung R1 im Zuge der weiteren Aushubbewegung des Arbeitsgerätes schwenken.

Figur 8 zeigt die gleiche Arretierung 31 aus Figur 6 und Figur 7 in entriegelter Stellung, wobei der Anschlag 8 nun in die unterste Stellung um die Scharniereinheit 18 verschwenkt ist. Dabei berührt die Oberkante des Vorsprunges 32 die Unterkante des Hakens 36 bzw. seiner Ausnehmung 33 und hebt den Haken 36 leicht gegen die Federkraft des Energiespeichers 34 an. Die Oberkante des Vorsprunges 32 ist dabei abgerunded, um besser an der Unterkante des Hakens 36 bzw. seiner Ausnehmung 33 vorbei gleiten zu können Dies ermöglicht beim Absenken des Gerätes 1 ein fehlerfreies Einklinken des Hakens 36 bzw. die Verriegelung der Arretierung 31.

In Figur 9 ist die entriegelte Situation aus Figur 8 in aufrechter Stellung inklusive des Tiefenführungsmittels dargestellt. Von Figur 9 und 8 über Figur 7 und kann der Verriegelungsvorgang der Arretierung beim Absenken des Arbeitsgerätes 1 nachvollzogen werden, bis dasTiefenführungselement 17 auf den Boden aufsetzt und der Verriegelungszustand der Arretierung aus Figur 6 und 5 und somit die Arbeitsstellung des Arbeitsgerätes aus Figur 4 und 3 wieder erreicht werden.

### BEZUGSZEICHENLISTE

| | |
|---|---|
| 1 | Landwirtschaftliches Arbeitsgerät |
| 2 | Rahmen |
| 3 | Mittelebene |
| 4 | Fahrwerk |
| 5 | Ausleger |
| 6 | Ausleger |
| 7 | Arbeitswerkzeug |
| 8 | Werkzeugebene |
| 9 | Kippachse |
| 10 | Schwenkachse |
| 11 | Kipprahmen |
| 12 | Bodenoberfläche |
| 13 | Werkzeugreihe |
| 14 | Werkzeugreihe |
| 15 | Stellmotor |
| 16 | Stellmotor |
| 17 | Tiefenführungsmittel |
| 18 | Scharniereinheit |
| 19 | Zugmaschine |
| 20 | Stellmotor |
| 21 | Doppelwalzeneinheit |
| 22 | Pendelausgleich |
| 23 | Lenkergetriebe |
| 24 | Striegelwerkzeuge |
| 25 | Tragarm |
| 26 | Lenker |
| 27 | Walze |
| 28 | Anschlag |
| 29 | Rahmen |
| 30 | Momentanpol |
| 31 | Arretierung |
| 32 | Vorsprung |
| 33 | Ausnehmung |
| 34 | Energiespeicher |
| 35 | Kulisse |
| 36 | Haken |
| 37 | Schwenkachse |
| | |
| | |
| | |
| | |
| | |

## Patentansprüche

1. Landwirtschaftliches Arbeitsgerät (1), welches mittels einer Hubvorrichtung (15, 20) von einer Arbeitsstellung in eine Aushubstellung ausgehoben oder umgekehrt zurück in die Arbeitsstellung abgesenkt werden kann, mit einem Rahmen (2, 11), wobei dem Rahmen (2, 11) mehrere Arbeitswerkzeuge (7) in einer Werkzeugebene (8) ausgerichtet zumindest mittelbar zugeordnet sind und den Arbeitswerkzeugen (7) des landwirtschaftlichen Arbeitsgerätes Tiefenführungsmittel (17) nachgelagert zugeordnet sind, mit welchen in einer Arbeitsstellung des Arbeitsgerätes (1) der Abstand der Arbeitswerkzeuge (7) zu einer Bodenoberfläche (12) eingestellt oder verändert werden kann, wobei zwischen dem Rahmen (2) und den Tiefenführungsmitteln (17) zumindest eine Scharniereinheit (18) angeordnet ist,
**dadurch gekennzeichnet, dass**
zwischen dem Rahmen (2) und den Tiefenführungsmitteln (17) zumindest eine Arretierung (31) angeordnet ist, mittels welcher die Tiefenführungsmittel (17) in der Arbeitsstellung relativ und unbeweglich zum Rahmen (2, 11) arretiert sind und bei einer Überführung von der Arbeitsstellung in eine Aushubstellung des Arbeitsgerätes (1) zum Rahmen (2) oder den Arbeitswerkzeugen (7) hin mittels der Scharniereinheit (18) beweglich pendeln oder schwenken können, wobei die Arretierung (31) passiv und durch Aushub des Arbeitsgerätes (1) oder des Rahmens (2,11) lösbar ausgebildet ist.

2. Landwirtschaftliches Arbeitsgerät nach Anspruch 1,
**dadurch gekennzeichnet,** die Arretierung (31) zumindest einen Vorsprung (32) und eine Ausnehmung (33) ausweist, wobei der Vorsprung (32) und die Ausnehmung (33) in eine Arretierstellung derart verhaken und eine Bewegung zwischen dem Vorsprung (32) und der Ausnehmung (33) in einer ersten Richtung (R1) unterbinden, wobei eine Bewegung zwischen dem Vorsprung (32) und der Ausnehmung (33) in einer zweiten Richtung (R2) eine Lösestellung der Arretierung (31) erreicht, in welcher der Vorsprung (32) und die Ausnehmung (33) entlang der ersten Richtung (R1) aneinander vorbei bewegt können.

3. Landwirtschaftliches Arbeitsgerät nach Anspruch 2,
**dadurch gekennzeichnet, dass** der Vorsprung (32) und die Ausnehmung (33) derart ausgebildet sind, dass deren Bewegung in der ersten Richtung (R1) und der zweiten Richtung (R2) in einer gemeinsamen Ebene verlaufend angeordnet sind.

4. Landwirtschaftliches Arbeitsgerät nach Anspruch 2 oder 3,
**dadurch gekennzeichnet, dass** Führungsmittel zumindest mittelbar zwischen Rahmen (2) und Tiefenführungsmitteln (17) angeordnet sind, welche eine Bewegung der Tiefenführungsmittel (17) im Bereich der Arretierung (31) in der ersten Richtung (R1) und / oder der zweiten Richtung (R2) führen und / oder limitieren.

5. Landwirtschaftliches Arbeitsgerät nach vorstehenden Ansprüchen,
**dadurch gekennzeichnet, dass** die Arretierung (31) hakenförmig und beweglich ausgebildet ist.

6. Landwirtschaftliches Arbeitsgerät nach vorstehenden Ansprüchen,
**dadurch gekennzeichnet, dass** das Arbeitsgerät (1) mehrteilig und klappbar ausgebildet ist, wobei zumindest ein erster Ausleger (5) und ein zweiter Ausleger (6) klapp- oder schwenkbar mit dem Rahmen (2, 11) verbunden sind und Arbeitswerkzeuge (7) und Tiefenführungsmittel (17) den Auslegern zugeordnet sind.

7. Landwirtschaftliches Arbeitsgerät nach vorstehenden Ansprüchen,
**dadurch gekennzeichnet, dass** der Rahmen (2) des Arbeitsgerätes (1) einen ersten Kipprahmen (11) aufweist, welcher um eine Kippachse (9), welcher quer oder senkrecht zu einer Mittelebene (3) des Arbeitsgerätes (1) schwenk- oder kippbar angeordnet ist, wobei die Ausleger (5, 6) schwenkbar um eine Schwenkachse (10), welche weitgehend parallel zu der Mittelebene (3) des Arbeitsgerätes (1) schwenkbar verläuft, angeordnet sind.

8. Landwirtschaftliches Arbeitsgerät nach vorstehenden Ansprüchen,
**dadurch gekennzeichnet, dass** die Tiefenführungsmittel (17) als Doppelwalzeneinheit (21) ausgebildet ist, welche über einen Pendelausgleich (22) zum Ausgleich von Bodenunebenheiten mit den Auslegern (5, 6) verbunden ist

9. Landwirtschaftliches Arbeitsgerät nach vorstehenden Ansprüchen,
**dadurch gekennzeichnet, dass** die Tiefenführungsmittel (17) mittels eines Lenkergetriebes (23) die Position der Tiefenführungsmittel (17) zu den Arbeitswerkzeugen (7) in Abstand und/oder Neigung einstellbar oder veränderbar ausgebildet sind.

10. Landwirtschaftliches Arbeitsgerät nach vorstehenden Ansprüchen,
**dadurch gekennzeichnet, dass** den Arbeitswerkzeugen (7) und/oder den Tiefenführungsmitteln (17) Einebnungs- und/oder Striegelwerkzeuge zugeordnet sind.

## Claims

1. An agricultural implement (1), which by means of a lifting device (15, 20) can be lifted from a working position into a lifted position or vice versa back into the working position, having a frame (2, 11), wherein the frame (2, 11) is at least indirectly assigned multiple working tools (7) oriented in a tool plane (8) and depth guide means (17) are assigned to the working tools (7) of the agricultural implement located downstream of the same, with which in a working position of the implement (1) the distance of the working tools (7) to a ground surface (12) can be adjusted or changed, wherein between the frame (2) and the depth guide means (17) at least one hinge unit (18) is arranged,
**characterised in that**
between the frame (2) and the depth guide means (17)at least one locking means (31)is arranged, by means of which the depth guide means (17) in the working position are locked relative and immovably relative to the frame (2, 11) and upon a transfer from the working position into a lifted position of the implement (1), can moveably swing or pivot towards the frame (2) or the working tools (7) by means of the hinge unit (18), wherein the locking means (31) is configured so as to be passive and releasable by lifting the implement (1) or the frame (2, 11).

2. The agricultural implement according to Claim 1, **characterised in that** the locking means (31) comprises at least one projection (32) and one recess (33), wherein the projection (32) and the recess (33) interlock in a locking position in such a manner and prevent a movement between the projection (32) and the recess (33) in a first direction (R1), wherein a movement between the projection (32) and the recess (33) in a second direction (R2) reaches a release position of the locking means (31), in which the projection (32) and the recess (33) can be moved past one another along the first direction (R1).

3. The agricultural implement according to Claim 2, **characterised in that** the projection (32) and the recess (33) are designed in such a manner that their movement in the first direction (R1) and the second direction (R2) are arranged so as to run in a common plane.

4. The agricultural implement according to Claim 2 or 3, **characterised in that** guiding means are at least indirectly arranged between frame (2) and depth guide means (17), which guide and/or limit a movement of the depth guide means (17) in the region of the locking means (31) in the first direction (R1) and/or the second direction (R2).

5. The agricultural implement according to the above claims, **characterised in that** the locking means (31) is designed hook-like and moveable.

6. The agricultural implement according to the above claims, **characterised in that** the implement (1) is designed in multiple parts so as to be foldable, wherein at least one first boom (5) and a second boom (6) are connected to the frame (2, 11) so as to be foldable or pivotable and working tools (7) and depth guide means (17) are assigned to the booms.

7. The agricultural implement according to the above claims, **characterised in that** the frame (2) of the implement (1) comprises a first tilting frame (11), which is arranged so as to be pivotable or tiltable about a tilting axis (9), which is arranged transversely or pivotably to a centre plane (3) of the implement (1), wherein the booms (5, 6) are arranged so as to be pivotable about a pivot axis (10), which pivotably runs largely parallel to the centre plane (3) of the implement (1).

8. The agricultural implement according to the above claims, **characterised in that** the depth guide means (17) are designed as double roller unit (21), which via an pendulum compensation (22) for offsetting ground irregularities is connected to the booms (5, 6) .

9. The agricultural implement according to the above claims, **characterised in that** the depth guide means (17) are designed by means of a link mechanism (23) so that the position of the depth guide means (17) relative to the working tools (7) is adjustable or changeable in distance and/or inclination.

10. The agricultural implement according to the above claims, **characterised in that** the working tools (7) and/or the depth guide means (17) are assigned flattening and/or harrowing tools.

## Revendications

1. Engin de travail agricole (1), qui au moyen d'un dispositif de levage (15, 20) peut être relevé, d'une position de travail dans une position d'excavation ou peut être ramené inversement dans la position de travail, doté d'un châssis (2, 11), au châssis (2, 11) étant associés au moins indirectement plusieurs outils de travail (7), alignés dans un plan d'outils (8) et aux outils de travail (7) de l'engin de travail agricole étant associés en aval des moyens de guidage en profondeur (17), à l'aide desquels, dans une position de travail de l'engin de travail (1), l'écart entre les outils de travail (7) et une surface du sol (12) peut être réglé ou modifié, entre le châssis (2) et les moyens de guidage en profondeur (17) étant placée au moins une unité de charnières (18), **caractérisé en ce qu'**entre le châssis (2) et les moyens de guidage en profondeur (17) est placé au moins un système de blocage (31), au moyen duquel, dans la position de travail, les moyens de guidage en profondeur (17) sont bloqués de manière indéplaçable et par rapport au châssis (2, 11) et lors d'un transfert de la position de travail dans une position de creusement de l'engin de travail (1), sont susceptibles d'osciller ou de pivoter de manière déplaçable en direction du châssis (2) ou des outils de travail (7) au moyen de l'unité de charnières (18), le système de blocage (31) étant conçu de manière passive et désolidarisable par excavation de l'engin de travail (1) ou du châssis (2, 11).

2. Engin de travail agricole selon la revendication 1, **caractérisé en ce que** le système de blocage (31) comporte au moins une saillie (32) et un évidement (33), la saillie (32) et l'évidement (33) s'accrochant dans une position de blocage et empêchant de la sorte un déplacement entre la saillie (32) et l'évidement (33) dans une première direction (R1), un déplacement entre la saillie (32) et l'évidement (33) dans une deuxième direction (R2) atteignant une position de désolidarisation du système de blocage (31), dans laquelle la saillie (32) et l'évidement (33) peuvent être déplacés le long de la première direction (R1), en passant l'un devant l'autre.

3. Engin de travail agricole selon la revendication 2, **caractérisé en ce que** la saillie (32) et l'évidement (33) sont conçus de telle sorte que leur déplacement dans la première direction (R1) et dans la deuxième direction(R2) sont placés de sorte à s'écouler dans un plan commun.

4. Engin de travail agricole selon la revendication 2 ou 3, **caractérisé en ce que** des moyens de guidage, lesquels guident et / ou limitent un déplacement des moyens de guidage en profondeur (17) dans la zone du système de blocage (31) dans la première direction (R1) et / ou dans la deuxième direction (R2) sont placés au moins indirectement entre le châssis (2) et des moyens de guidage en profondeur (17).

5. Engin de travail selon des revendications précédentes, **caractérisé en ce que** le système de blocage (31) est conçu en forme de crochet et de manière déplaçable.

6. Engin de travail selon des revendications précédentes, **caractérisé en ce que** l'engin de travail (1) est conçu en plusieurs parties et de manière repliable, au moins une première flèche (5) et une deuxième flèche (6) étant assemblées de manière repliable ou à pouvoir pivoter avec le châssis (2, 11) et des outils de travail (7) et des moyens de guidage en profondeur (17) étant associés aux flèches.

7. Engin de travail selon des revendications précédentes, **caractérisé en ce que** le châssis (2) de l'engin de travail (1) comporte un premier châssis basculant (11), lequel est placé de manière à pouvoir pivoter ou basculer autour d'un axe de basculement (9), à la transversale ou à la perpendiculaire d'un plan médian (3) de l'engin de travail (1), les flèches (5, 6) étant placées de manière pivotante autour d'un axe de pivotement (10), lequel s'écoule de manière pivotante à la parallèle du plan médian (3) de l'engin de travail (1).

8. Engin de travail selon des revendications précédentes, **caractérisé en ce que** les moyens de guidage en profondeur (17) sont conçus sous la forme d'une unité à double rouleau (21), laquelle est assemblée avec les flèches (5, 6) par l'intermédiaire d'une compensation d'oscillation (22), destinée à compenser des irrégularités du sol.

9. Engin de travail selon des revendications précédentes, **caractérisé en ce que** les moyens de guidage en profondeur (17) sont conçus de manière à régler ou à modifier en écart et / ou en inclinaison la position des moyens de guidage en profondeur (17) par rapport aux outils de travail (7), à l'aide d'une transmission par bras (23).

10. Engin de travail selon des revendications précédentes, **caractérisé en ce qu'**aux outils de travail (7) et / ou aux moyens de guidage en profondeur (17) sont associés des outil de nivellement et / ou de déchaumage.
